# FASCICULE DE BREVET EUROPEEN

(11) **EP 2 883 013 B1**
(45) Date de publication et mention de la délivrance du brevet: **21.03.2018**
(21) Numéro de dépôt: 13735283.7
(22) Date de dépôt: 11.07.2013
(51) Int. Cl.: F28F 9/02, F25B 15/00, F25B 37/00, F28D 9/04

(54) **ABSORBEUR A ECHANGEUR A PLAQUE SPIRALEE AVEC ALIMENTATION FLUIDIQUE HOMOGENE**
SPIRALPLATTENWÄRMETAUSCHER MIT HOMOGENER FLÜSSIGKEITSZUFUHR
SPIRAL-PLATE HEAT EXCHANGER WITH HOMOGENEOUS FLUID SUPPLY

(30) Priorité: 23.07.2012 FR 1257096
(43) Date de publication de la demande: 17.06.2015
(73) Titulaire: Commissariat à l'Énergie Atomique et aux Énergies Alternatives, 75015 Paris (FR)
(72) Inventeur: WYTTENBACH, Joël, F-73230 Thoiry (FR); BOUDEHENN, François, F-07190 Saint Sauveur de Montagut (FR); DEMASLES, Hélène, F-73290 La Motte-Servolex (FR)
(74) Mandataire: Novaimo
(86) Numéro de dépôt international: PCT/EP2013/064649
(87) Numéro de publication internationale: WO 2014/016128

(56) Documents cités:
- CN-A- 1 153 277
- JP-A- H1 026 486
- JP-A- H08 166 194
- US-A- 2 663 549

## Description

### Domaine technique de l'invention

L'invention concerne de manière générale la manière d'approvisionner l'entrée d'un échangeur à plaques en un ou plusieurs fluide(s). L'invention a pour objet plus particulièrement un système comprenant un échangeur à plaque spiralée ayant un premier canal d'écoulement fluidique en forme de spirale à alimenter en au moins un premier fluide. Un système selon le préambule de la revendication 1 est connu du document CN 1153277 A. L'invention a pour objet également une machine thermodynamique comprenant au moins un tel système, notamment une machine de réfrigération par absorption dans laquelle le système est constitué d'un absorbeur réalisant une absorption, par le premier fluide, d'un deuxième fluide tel qu'un fluide réfrigérant.

### État de la technique

La forte augmentation actuelle des besoins de climatisation en période estivale confère au marché du rafraîchissement solaire un potentiel de développement très important. Ces systèmes utilisent majoritairement des machines à absorption.

Avec l'avènement, depuis quelques années, des machines à absorption de petite puissance d'une part et de la volonté de disposer de solutions compactes et complètes d'autre part, le marché devrait connaître un fort un développement futur. Toutefois, l'une des limitations à ce développement est le coût d'investissement initial nécessairement très important. Pour cette raison, un développement important des machines de petites puissances doit être effectué pour en baisser les coûts. Il est donc nécessaire de répondre aux problématiques budgétaires et d'industrialisation susmentionnées en même temps que techniques évoquées plus loin. Les problématiques techniques essentielles concernent notamment le composant de la machine connu sous la dénomination « absorbeur ».

Dans une machine de réfrigération par absorption, le compresseur classique est remplacé par une gestion astucieuse et combinée de premier et deuxième fluides respectivement absorbant et réfrigérant, avec un transfert de masse par absorption du deuxième fluide vers le premier fluide. Le deuxième fluide, ayant une fonction de réfrigérant, arrive à l'absorbeur à l'état gazeux ou quasiment totalement gazeux. L'absorbeur de la machine est l'un des éléments essentiels, étant également le plus spécifique par rapport aux techniques de réfrigération classiques à compression mécanique. Les équilibres entre les phases en présence y sont complexes. Alors qu'un système de réfrigération classique se base sur la force motrice d'un compresseur, les machines à absorption utilisent le couple formé par les premier et deuxième fluides. Le premier fluide permet de transporter le réfrigérant sous forme liquide de la basse à la haute pression. Le mélange est ensuite chauffé pour séparer les deux fluides et fournir ainsi une force motrice au circuit réfrigérant. Après avoir traversé le circuit classique de réfrigération, le deuxième fluide réfrigérant doit à nouveau être absorbé par le premier fluide absorbant avant de revenir vers l'organe de chauffe. Ce phénomène d'absorption est spécifique et difficile à appréhender puisqu'il combine un écoulement avec un transfert de masse, un changement de phase et un échange thermique, tous ces phénomènes étant liés entre eux à propos des vitesses d'avancement.

Une technique connue est de concevoir un absorbeur comprenant un échangeur à plaques planes parallèles éventuellement inclinées par rapport à la verticale, ou un échangeur à tubes logés entre une calandre cylindrique intérieure et/ou une calandre cylindrique extérieure. Ces échangeurs présentent l'avantage d'être configurés de sorte à former, dans au moins un canal d'écoulement fluidique, un film ruisselant de premier fluide tandis que le deuxième fluide circule en co-courant ou à contre-sens le long du film ruisselant dans le même canal d'écoulement fluidique.

Les documents JP2006162154, KR20010065569, JP10332225, WO9841798, CN1153277 divulguent de telles solutions, mais elles ne sont pas satisfaisantes en termes de robustesse et de fiabilité, d'industrialisation et de coût. Notamment, la distribution des fluides dans les canaux est peu satisfaisante en termes d'homogénéité, de compacité, de quantité de fluide et de fiabilité (notamment sujet à encrassement dans le cas de distribution au travers de trous localisés).

Bien que ces problématiques concernent principalement le cas de machines de réfrigération par absorption, elles peuvent tout autant toucher des machines thermodynamiques de nature différentes à double distribution de gaz et de liquide dans des canaux communs, voire même le cas de tours de lavage. Elles peuvent aussi se poser dans le cas d'une distribution mono-fluide. La problématique principale est finalement, à moindre coût, de manière fiable, robuste et facilement industrialisable, de répartir de manière la plus homogène possible au moins le premier fluide dans des canaux d'un échangeur, dans le cadre non exclusif mais principal d'une absorption entre fluides.

Les documents WO09962318, JP60232495, DE102010041289, WO9812487 relatifs à des échangeurs destinés à la formation d'un film ruisselant avec au moins un premier fluide dans une application ne concernant pas le domaine de l'absorption, ne répondent pas non plus à ces problématiques et restent complexes en raison d'une distribution en de multiples points (utilisation de trous localisés) et/ou à plusieurs étages de distribution.

### Objet de l'invention

Le but de la présente invention est de proposer un système qui remédie simultanément à l'ensemble des inconvénients listés ci-dessus.

Notamment, un objet de l'invention est de fournir un système permettant de distribuer de manière la plus homogène possible au moins le premier fluide dans un échangeur de manière fiable et robuste, économique et facilement industrialisable.

Ces objets sont atteints par les revendications annexées.

### Description sommaire des dessins

Les modes particuliers de réalisation de l'invention sont donnés à titre d'exemples non limitatifs et représentés sur les dessins annexés, dans lesquels :
- la figure 1 est une vue en perspective, en coupe partielle, d'un exemple de système qui ne forme pas partie de l'invention.
- les figures 2 et 3 sont des vues en perspective de deux exemples d'un dispositif d'alimentation d'un deuxième fluide qui ne forment pas partie de l'invention.
- la figure 4 est une vue en perspective d'un exemple de dispositif de distribution d'un premier fluide, qui ne forme pas partie de l'invention.
- la figure 5 illustre en perspective un exemple d'un dispositif anti-coalescesce qui ne forme pas partie de l'invention.
- et la figure 6 est une vue en perspective, en coupe partielle, d'un autre exemple de système selon l'invention, équipé d'un mode de réalisation de dispositif de distribution de premier fluide.

### Description de modes préférentiels de l'invention

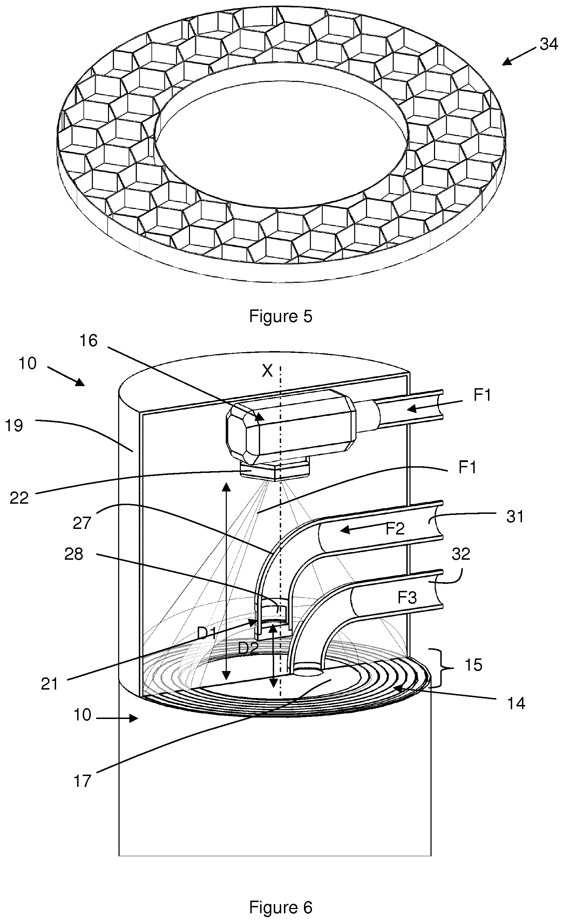

La suite de la description, en référence à la figure 6, est relative à une machine thermodynamique équipée selon un mode de réalisation d'un système objet de l'invention.

L'absorption par un premier fluide F1 d'un deuxième fluide F2 permet à un gaz (fluide F2) d'être absorbé par une solution liquide (fluide F1). Dans le cadre des machines frigorifiques à absorption, cette réaction est exothermique et sensible à la température : un échauffement a tendance à ralentir la vitesse de la réaction d'absorption jusqu'à un arrêt total si la température d'équilibre thermodynamique est atteinte. De plus la température d'équilibre décroît au fur et à mesure de l'absorption Il est donc recherché de refroidir la solution absorbante (fluide F1) au fur et à mesure de l'avancement de la réaction d'absorption du fluide F2. Il pourra donc préférentiellement être utilisé un troisième fluide F3 destiné à remplir une fonction de refroidissement. De plus, la réaction d'absorption doit être aussi complète que possible car à l'issue de l'absorption, la solution résultante peut être entraînée vers une pompe hydraulique de la machine thermodynamique, dont le fonctionnement est susceptible d'être endommagé par la présence résiduelle de gaz.

Comme indiqué précédemment, le principe de former un film ruisselant avec le premier fluide F1 dans le cadre d'une réaction d'absorption est couramment utilisé au moyen d'échangeurs à tubes et calandre, avec des résultats tout à fait satisfaisants au niveau de la réaction d'absorption et de l'échange thermique avec le troisième fluide. Il s'agit donc de reproduire ces conditions de fonctionnement favorables tout en répondant aux problématiques énoncées précédemment.

A cet effet, selon une caractéristique importante, le système 10 comprend d'une part un échangeur 11 à plaque spiralée 12 enroulée autour d'un axe principal X de l'échangeur 11 de sorte à délimiter un premier canal d'écoulement fluidique 13 en forme de spirale débouchant à une première extrémité axiale 14 de l'échangeur 11 au niveau d'une zone d'entrée 15 du canal 13 dont l'encombrement global est compris dans une couronne, c'est-à-dire globalement annulaire vide dans une zone centrale. L'échangeur 11 est notamment orienté de sorte que son axe principal X soit vertical ou sensiblement vertical. Il s'agit d'une couronne centrée sur l'axe X et incluse dans un plan perpendiculaire à l'axe X.

Selon une caractéristique importante complémentaire, le système comprend d'autre part un dispositif de distribution 16, détaillé plus loin, configuré pour alimenter de manière homogène toute la surface de la couronne en au moins un premier fluide F1. Ainsi, le dispositif de distribution 16 permet d'arroser au moins l'entrée du canal 13 en forme de spirale et l'extrémité fermée d'un deuxième canal d'écoulement fluidique pour l'écoulement éventuel d'un troisième fluide F3.

Les avantages d'un échangeur à plaques spiralées, notamment par rapport à un échangeur à tubes et calandres, sont essentiellement les suivants :
- permet la réalisation à bas coût d'un absorbeur, dont l'industrialisation est en grande partie déjà réalisée,
- une forte diminution des quantités de fluides nécessaires,
- une diminution majeure de l'encombrement de la solution,
- une plus faible sensibilité à l'orientation (verticalité) en fonction de la nature de la distribution,
- une optimisation de l'écoulement et des transferts de masse et de chaleur,
- une robustesse améliorée en termes de distribution fluidique, avec une meilleure homogénéité, comme détaillé plus loin,
- une meilleure tolérance à l'encrassement de la distribution grâce à l'aménagement avantageux de multiples chicanes possibles, comme détaillé plus loin.

D'autre part, les avantages par rapport à un absorbeur basé sur un échangeur à plaques planes sont essentiellement les suivants :
- l'espace disponible donne plus de liberté pour la conception du distributeur,
- un rapport dimensionnel très favorable à l'établissement d'un film ruisselant: les échangeurs 11 à plaques spiralées industriels peuvent avoir un meilleur rapport entre sa hauteur et la surface proposée, que les échangeurs à plaques planes,
- une meilleure répartition du film ruisselant, notamment dans la partie supérieure des plaques spiralées 12.

De manière connue, un échangeur 11 industriel à plaque spiralée 12 présente une forme cylindrique, notamment globalement de section circulaire perpendiculairement à l'axe principal X. La hauteur de l'échangeur 11 comptée selon l'axe X peut être divisée en trois parties : une partie centrale occupée par la plaque spiralée 12 et deux parties extrêmes pour l'aménagement de premier et deuxième boîtiers d'alimentation fluidique. Pour les échangeurs 11 à plaque spiralée 12 fonctionnant à flux croisés, ce qui est le cas, le troisième fluide F3 de refroidissement est introduit au centre de la spirale, dans une calandre intérieure 17. Le troisième fluide F3 progresse ensuite dans un deuxième canal d'écoulement fluidique, de forme spiralée, distinct du premier canal d'écoulement fluidique 13. Le deuxième canal est délimité par la plaque 12 sur une demi hauteur de la partie centrale de l'échangeur 11 autour de l'axe principal X jusqu'à ce que la spirale atteigne le point de tangence extérieur du cylindre au niveau d'une calandre extérieure 18. Au moins une plaque 12 est donc logée entre les calandres 17 et 18. Le fluide F3 traverse ensuite une paroi médiane perpendiculaire à l'axe X à mi-hauteur de la partie centrale de l'échangeur, en direction de la deuxième demi hauteur de la partie centrale, pour suivre un parcours en spirale à partir de la calandre extérieure 18 et jusqu'à la calandre intérieure 17. Le pas de la spirale empruntée par le fluide F3 le long du deuxième canal d'écoulement fluidique et l'épaisseur de ce canal sont dimensionnés par un bosselage de telle sorte que les révolutions ou spires ne soient pas jointives entre elles, laissant avantageusement un interstice formant le premier canal d'écoulement fluidique 13 pour le premier fluide F1, voire également pour le deuxième fluide F2 pour les applications d'absorption.

Ce premier canal 13 a une section spiralée dans un plan perpendiculaire à l'axe principal X du cylindre. A l'inverse du deuxième canal dédié à l'écoulement fluidique du troisième fluide F3, le premier canal 13 est ouvert aux première 14 et deuxième (non représentée) extrémités axiales de l'échangeur 11 respectivement sur des boîtiers d'alimentation fluidique supérieur 19 et inférieur (non représenté). Le premier canal 13 destiné à l'écoulement fluidique des fluides F1 et éventuellement F2 ne communique pas avec la calandre intérieure 17 et il est traversé par un flux fluidique parallèle à l'axe principal X. Le sens d'écoulement du troisième fluide F3 est à flux croisé de celui des premier et deuxième fluides F1, F2

Avantageusement, le dispositif de distribution 16 comprend une sortie (au niveau de laquelle le premier fluide F1 sort uniformément hors du dispositif de distribution 16) agencée à une distance D1 de la zone d'entrée 15 suivant l'axe principal X de l'échangeur 11.

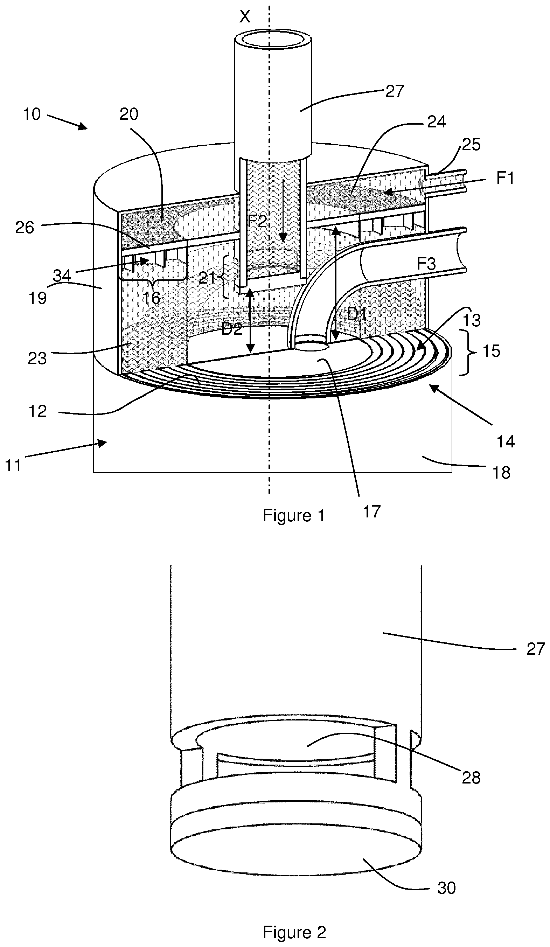

Dans l'exemple de la figure 1, la sortie du dispositif de distribution 16 est constituée par un élément de répartition 20 configuré de sorte à être traversé par le premier fluide F1 en lui faisant subir une perte de charge telle que le premier fluide F1 sort hors de l'élément de répartition 20 selon une répartition surfacique uniforme au niveau d'une surface de sortie de l'élément de répartition 20, d'une manière assurant l'alimentation homogène en premier fluide F1 sur toute la surface de sa couronne. La surface de sortie de l'élément de répartition 20 est constituée par la face de l'élément de répartition 20 en regard de la couronne selon l'axe X et située à la distance D1 de celle-ci. La perte de charge est un paramètre global de l'élément de répartition 20 dont la construction peut fortement varier. On recherche ici à créer une perte de charge suffisante pour être largement supérieure (d'un facteur 10 par exemple) au différentiel de pression créé dans la zone amont (à cause de l'effet de ralentissement du flux et des frottements visqueux) entre l'entrée 25 et la surface amont de l'élément 20. Cette perte de charge ne doit pas dépasser 1 bar dans le cadre de la réfrigération solaire.

La perte de charge acceptable et suffisante dépend également de plusieurs paramètres géométriques et d'écoulement, elle peut être typiquement comprise entre 3 et 250 mbar.

Préférentiellement, l'élément de répartition 20 comprend des orifices de passage traversants toute l'épaisseur de l'élément de répartition 20 et débouchant sur la surface de sortie de l'élément 20, ces passages traversants étant avantageusement tortueux ou avec des chicanes depuis la surface d'entrée vers la surface de sortie.

Dans un exemple l'élément de répartition 20 comprend une structure, notamment autoporteuse, de matière frittée formée par agglomération de billes. Cette structure est notamment configurée de sorte à être dépourvue de direction privilégiée d'écoulement du premier fluide F1 et à présenter un coefficient d'écoulement du premier fluide F1 dépendant de la finesse de la matière fritée. Dans le cadre d'un matériau fritté, on peut obtenir cette perte de charge avec un matériau de classe typiquement entre 3 et 60 µm sur une épaisseur de 1 à 10 mm

Généralement, la taille des interstices d'un matériau fritté convenable pour cette application est comprise entre 20 et 500µm. La taille des interstices n'est pas forcément égale à celle des grains frittés.

Dans un exemple (non représenté), l'élément de répartition 20 comprend un empilement de toiles métalliques superposées selon l'axe principal X de l'échangeur 11.

Ces exemples partagent les avantages suivants :
- une construction intégrale en matériau inoxydable est possible, avec des assemblages soudés. Ceci permet de travailler avec des couples de fluides F1 et F2 corrosifs comme respectivement le couple ammoniac/eau par exemple.
- le matériau poreux est régulièrement passant. Pour cette raison, son positionnement est simple, rendant le système plus robuste.
- les matériaux poreux sont des produits industriels, déjà utilisés pour d'autres applications (catalyse, vinification et filtration...).
- les multitudes de trajets possibles en chicanes pour l'écoulement du premier fluide F1 induisent une forte tolérance aux obstructions dues aux impuretés, puisqu'il y a de nombreux trajets adjacents possibles en cas d'obstacle. De plus, la matière frittée ayant une surface irrégulière limite fortement l'effet d'étanchéité réalisée par les impuretés. Il y a donc une très bonne résistance de la solution à l'encrassement.

Selon l'art antérieur présenté dans le document CN1153277, une technique connue consistait à créer un nombre fini mais important de trous ou passages permettant au liquide de s'éjecter hors de la canalisation d'écoulement du premier fluide liquide, par exemple par la réalisation d'un tube perforé sur une portion de sa surface. Les difficultés liées à cette méthode proviennent du compromis délicat entre la nécessiter de disposer de trous ayant les plus faibles diamètres possibles pour obtenir une bonne distribution du premier fluide, en regard des problèmes d'encrassement et de colmatage dommageables en raison du nombre discret de trous : plus les trous sont petits, plus ils s'obstruent facilement. L'augmentation du nombre de trous est liée à la diminution de leur diamètre, rendant la réalisation très complexe. La méthode proposée dans la présente invention consiste au contraire à utiliser un matériau industriel dont la perte de charge est suffisamment importante pour assurer l'homogénéité avantageusement surfacique de la distribution. Ce type de matériau a pour effet de créer un nombre important de chicanes sur le trajet du premier fluide F1, ce qui a pour effet de présenter un nombre très important de trajets possibles. L'obturation éventuelle d'une portion de la surface de sortie n'entraîne donc qu'une déviation très locale du flux qui suit alors un trajet adjacent, ce qui permet au flux sortant de ne jamais présenter de discontinuité marquée contrairement à l'art antérieur présenté ci-dessus où de tels risques existent. La fabrication de tels matériaux est maîtrisée au niveau industriel, ce qui est aussi un critère de choix technologique important. La finesse variable des structures frittées permet d'ajuster le coefficient d'écoulement à géométrie extérieure constante. Les pertes de charge peuvent être particulièrement importantes pour une faible épaisseur, ce qui permet de diminuer la taille globale du dispositif de distribution 16 par rapport à l'art antérieur tout en maintenant une très bonne homogénéité de la distribution du premier fluide F1.

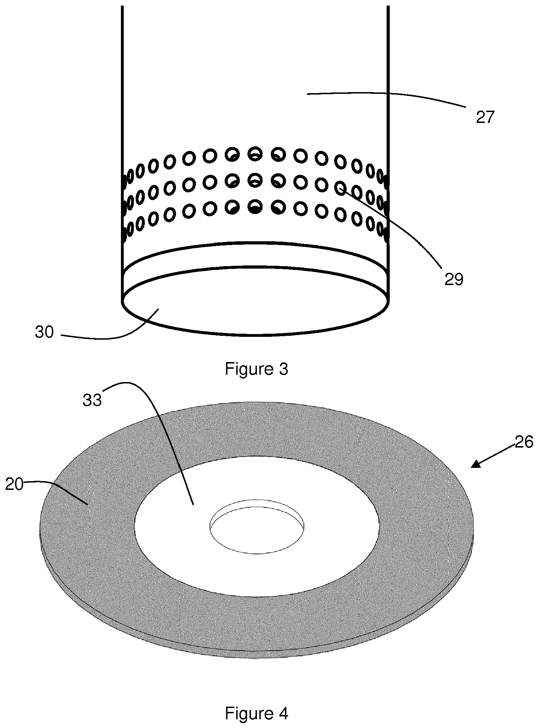

En référence à la figure 4, la surface de sortie de l'élément de répartition 20 présente une forme de couronne alignée suivant l'axe principal X de l'échangeur 11 avec la forme de couronne de la zone d'entrée 15. La couronne formée par l'élément de répartition 20 présente notamment des dimensions égales aux dimensions de la couronne délimitée par la zone d'entrée 15.

Dans un mode de réalisation en référence à la figure 6, le dispositif de distribution 16 comprend une buse 22 de projection du premier fluide F1 configurée de sorte à former à sa sortie (la sortie de la buse 22 étant constitutive de la sortie du dispositif de distribution 16) un jet de premier fluide F1 de forme conique, creux au centre du cône et orienté selon l'axe principal X de l'échangeur 11. Le jet est notamment configuré, grâce à une conception idoine de la buse 22, de sorte à présenter, au niveau de la zone d'entrée 15, une forme de couronne présentant des dimensions égales aux dimensions de la couronne de la zone d'entrée 15, vue dans un plan de coupe du jet perpendiculaire à l'axe X. L'écoulement au sein du jet présente une section annulaire. Notamment, une buse 22 de type spray peut être choisie en fonction de la géométrie annulaire recherchée de son jet de sortie.

Avantageusement mais non exclusivement, il pourra s'agir d'une machine de réfrigération par absorption dans laquelle le système constitue un absorbeur destiné à réaliser une absorption par le premier fluide F1, d'un deuxième fluide F2 tel qu'un fluide réfrigérant de type gaz au moins au niveau d'une partie du circuit réfrigérant de la machine thermodynamique. C'est pourquoi, outre le dispositif de distribution 16 du premier fluide F1 alimentant le premier canal d'écoulement 13 de manière la plus homogène possible entre eux, le système peut aussi comporter un dispositif d'alimentation 21 agencé au-dessus de la première extrémité axiale 14 de l'échangeur 11 et configuré pour alimenter la zone d'entrée 15 du premier canal d'écoulement fluidique 13 en un deuxième fluide F2, notamment un gaz, en sus du premier fluide F1. Avantageusement, l'échangeur 11 à plaque spiralée 12 et/ou le dispositif de distribution 16 seront configurés, dans ce cas, de sorte que le premier fluide F1 sortant hors du dispositif de distribution 16 forme un film ruisselant le long du premier canal d'écoulement fluidique 13.

Le dispositif d'alimentation 21 alimente ainsi le premier canal d'écoulement 13 de l'échangeur 11 à plaque spiralée 12 en un deuxième fluide F2 prévu pour circuler dans le premier canal 13 spiralé conjointement avec le premier fluide F1, notamment le long du film ruisselant formé par ce dernier après sa sortie uniforme hors du dispositif de distribution 16. Les dispositifs de distribution 16 du premier fluide F1 et d'alimentation 21 en deuxième fluide D2 sont notamment agencés de sorte à alimenter le premier canal 13 au niveau de la zone d'alimentation 15 commune aux premier et deuxième fluides F1, F2. Le premier canal 13 est configuré de sorte que, dans celui-ci, le deuxième fluide F2 circule le long du film ruisselant de premier fluide F1 et est absorbé par le premier fluide F1 avec un transfert de masse du deuxième fluide F2 vers le premier fluide F1.

Ainsi, préférentiellement, le premier fluide est un liquide de type absorbant et le deuxième fluide est un gaz apte à être au moins partiellement absorbé par le premier fluide avec un transfert de masse du deuxième fluide vers le premier fluide. Ce deuxième fluide peut notamment être un réfrigérant.

Le dispositif d'alimentation 21 comprend avantageusement une sortie au niveau de laquelle le deuxième fluide F2 est éjecté hors du dispositif d'alimentation 21. Cette sortie est agencée à une distance D2 par rapport à la zone d'entrée 15, suivant l'axe principal X de l'échangeur 11.

Selon le mode de réalisation représenté, la sortie du dispositif d'alimentation 21 en deuxième fluide F2 est située, selon l'axe principal X de l'échangeur 11, entre la zone d'entrée 15 et le dispositif de distribution 16 en premier fluide. F1 Autrement dit, la distance D2 est alors inférieure à la distance D1. Une telle conception permet de parvenir à une configuration dans laquelle un flux formé par le deuxième fluide F2 éjecté hors du dispositif d'alimentation 21 rencontre le premier fluide F1 avant d'atteindre la zone d'entrée 15 : le deuxième fluide F2 éjecté à la sortie du dispositif d'alimentation 21 rencontre, après son éjection, un flux formé par le premier fluide F1 préalablement éjecté à la sortie du dispositif de distribution 16. Dans le mode de réalisation de la figure 6, la distance D2 peut toutefois être supérieure à la distance D1. Ces opérations de rencontre se passent avant que le premier fluide et/ou le deuxième fluide n'atteigne la zone d'alimentation 15.

Avantageusement, la sortie du dispositif d'alimentation 21 en deuxième fluide F2 est configurée de sorte que le deuxième fluide F2 est éjecté dans une direction perpendiculaire (ou plus généralement un plan perpendiculaire) à l'axe principal X de l'échangeur 11. Puis, dans la variante représentée, le flux de fluide F2 ainsi éjecté a ensuite tendance à s'écouler vers le bas, avant de rencontrer le flux formé par le premier fluide F1 préalablement éjecté.

Dans la figure 1 le système comprend un premier boîtier d'alimentation, ici le premier boîtier d'alimentation 19, prolongeant axialement l'échangeur 11 à sa première extrémité axiale 14. Ce premier boîtier d'alimentation 19 comprend :
- une première chambre 23, notamment une chambre inférieure et communiquant avec la zone d'entrée 15 du premier canal d'écoulement fluidique 13,
- une deuxième chambre 24, notamment une chambre supérieure, disposée axialement du côté opposé à l'échangeur 11 par rapport à la première chambre 23 et équipée d'une entrée 25 en premier fluide F1 et configurée de sorte à être remplie (noyée dans le cas d'un liquide) par le premier fluide F1,
- une paroi de séparation 26 entre les première et deuxième chambres 23, 24, la paroi de séparation 26 étant au moins partiellement constituée par l'élément de répartition 20 de sorte à assurer une éjection uniforme de premier fluide F1 de la deuxième chambre vers la première chambre, notamment selon une répartition régulière en forme de couronne.

L'élément de répartition 20, régulièrement passant, présente une perte de charge suffisante pour permettre une répartition homogène du flux de premier fluide liquide, en aval de celle-ci. Le fait qu'une quantité de deuxième fluide gazeux soit introduite dans la chambre inférieure 23 introduit une différence de type d'écoulement sur le liquide au niveau de l'élément de répartition 20. L'écoulement en amont (dans la chambre 24) est noyé, tandis qu'en aval, il est diphasique avec la présence d'un ruissellement du liquide. Des gouttelettes de liquide se forment et tombent par gravité dans une atmosphère composée uniquement du gaz réactif. La réaction entre le liquide et le gaz commence dès le début de la chute des gouttelettes, en aval de l'élément de répartition 20. Elle est limitée par l'échauffement du liquide résultant de la réaction d'absorption tant que celui-ci n'est pas refroidi au contact des plaques spiralées 12.

L'utilisation d'un matériau poreux pour constituer l'élément de répartition 20 peut tendre à réduire fortement la vitesse du premier fluide F1 éjecté hors de la deuxième chambre 24, ce qui favorise un effet de coalescence du flux aval en un seul filet. Ceci s'opposant à l'objectif recherché de distribution homogène, le système peut comprendre un dispositif anti-coalescence 34 configuré pour s'opposer à l'effet de coalescence du premier fluide F1 éjecté à la surface de sortie de l'élément de répartition 20, sous la paroi 26. Le dispositif anti-coalescence 34 possède des éléments d'appui en contact ou à proximité immédiate (la distance devant être inférieure à 0.5 mm) de la surface de sortie en différents emplacements de la surface de sortie. Chaque élément d'appui peut être formé par un bord supérieur d'une paroi, les parois constitutives du dispositif anti-coalescence 34 étant reliées entre elles de sorte à former une structure complexe, par exemple en nid d'abeille, disposée entre la sortie de l'élément de répartition 20 et la zone d'entrée 15 du premier canal 13. La structure complexe est avantageusement disposée directement à la sortie, en contact potentiellement, de la surface de sortie de l'élément 20. Lorsque les gouttelettes formées par le dispositif anti-coalescence 34 arrivent dans la zone 15, elles forment normalement un film ruisselant sur la plaque 12, par effet de capillarité. La structure en nid d'abeille n'est qu'un exemple parmi une multitude de géométries possibles. En vue de dessus, il est possible d'avoir une géométrie en quadrillages, en losanges, en triangles, en spirales, en cercles tangents...

Les forces dues à la capillarité (ou aux tensions superficielles) tendent à créer un flux horizontal sur la face inférieure de l'élément de répartition 20, ce qui est contre-productif en vue d'une distribution surfacique homogène. La géométrie proposée permet de limiter ce flux horizontal en exploitant ces mêmes forces de capillarité le long de parois verticales du dispositif anti-coalescence 34 jusqu'à leur extrémité inférieure. A ce point extrême, la propagation horizontale est fortement défavorisée par la finesse des parois. Il y a alors une formation de gouttes sur toute la longueur du bord inférieur présenté par les parois. Ces gouttes se détachent par gravité et forment une pluie de densité surfacique constante sur la section en couronne considérée. L'avantage de cette structure est donc d'homogénéiser l'écoulement. La sensibilité à la verticalité de l'échangeur est bien moindre que pour un système à tubes et calandres. Une variante possible est de prévoir que l'élément 34 ne soit pas plan sur sa face inférieure, en créant un profil en dent de scie par exemple. Ceci rend alors le dispositif 34 robuste face à un défaut de verticalité puisque la coalescence horizontale est alors moindre.

La perte de charge admissible sur l'écoulement du premier flux F1, lorsqu'il s'agit d'un liquide, n'est pas un facteur particulièrement limitant dans la mesure où le liquide provient de la partie du circuit à haute pression avant de passer par une vanne de laminage et avant d'entrer dans l'absorbeur fonctionnant au niveau basse pression. Ces niveaux de pression dépendent du couple de fluides F1, F2 et des températures des circuits secondaires, l'écart entre les deux niveaux étant de l'ordre de plusieurs bars pour les systèmes fonctionnant au-dessus de la pression atmosphérique.

La paroi de séparation 26 de forme annulaire est représentée à la figure 4. L'élément de répartition 20 forme une partie extérieure de la paroi 26 (représentée par une partie grisée), la partie restante du côté intérieur de l'anneau étant formé par un élément étanche 33 à tout écoulement de fluide F1 (partie non grisée). En son centre, cet élément étanche 33 intérieur délimite un passage pour la mise en place de l'élément tubulaire 27 utilisé pour la constitution du dispositif d'alimentation 21.

Notamment, la sortie du dispositif d'alimentation 21 en deuxième fluide F2 peut être logée dans la première chambre 23. Le dispositif d'alimentation 21 comporte un élément tubulaire 27 d'écoulement du deuxième fluide F2 passant par la deuxième chambre 24, traversant la paroi de séparation 26 et ayant une partie d'extrémité borgne logée dans la première chambre 23. Les parois de la partie borgne située dans la première chambre 23 sont munies de lumières radiales (figure 2) ou d'une multitude de perçages radiaux 29 (figure 3) constitutifs de la sortie du dispositif d'alimentation 21.

Dans le premier mode de réalisation en référence à la figure 2, le deuxième fluide F2 circule selon un flux descendant qui vient s'éclater dans toutes les directions perpendiculaires à l'axe X descendant lorsqu'il est forcé de circuler dans les lumières radiales 28 agencées latéralement à l'élément tubulaire 27. La géométrie de ces lumières est dimensionnée pour obtenir le meilleur compromis possible entre les facteurs suivants :
- une limitation des pertes de charge occasionnées,
- une limitation des perturbations sur l'écoulement des gouttelettes liquides de premier fluide F1,
- une homogénéité de révolution autour de l'axe X,
- une facilité de fabrication industrielle.

Dans l'exemple de la figure 3, la multitude de perçages radiaux 29 est réalisée sur le pourtour de l'élément tubulaire 27 à proximité de l'extrémité obturée par un bouchon 30. Avec un dimensionnement des perçages choisi pour assurer une répartition radiale uniforme du flux de fluide F2. Par exemple, les perçages 29 peuvent être répartis sous la forme d'un réseau disposés régulièrement le long des lignes définissant les périmètres de l'élément tubulaire. Cette géométrie présente l'avantage d'une bonne homogénéité de l'écoulement à 360 degrés autour de l'axe, à l'exception des faibles effets dus à la discrétisation de la surface ouverte. Cette géométrie crée un écoulement stable et il est possible de réaliser un dimensionnement à l'aide de corrélations connues sans avoir recours à une simulation. Il s'agit notamment de limiter la perte de charge générée par ce dispositif. Une telle sortie peut être assemblée sur la base de produits industriels connus, ce qui est avantageux.

Dans la variante équipée d'une buse 22, le fluide F2 arrive dans la zone de distribution par une entrée latérale 31 prolongée jusqu'au centre de la calandre, sous le jet liquide, jusque dans la zone centrale du jet où une lumière 28 dans l'élément tubulaire 27 permet de libérer le fluide F2 dans le premier boîtier d'alimentation 19 dépourvu de paroi de séparation 26. La lumière 28 peut être semblable à celles décrites plus haut ou peut être remplacée par une multitude de perçages 29. Le troisième fluide F3 est alimenté par une entrée latérale 32 située sous celle du deuxième fluide F2 et traverse la zone de distribution de manière étanche pour aller alimenter la calandre intérieure 17.

Les avantages de la disposition de la figure 6 sont :
- le flux de deuxième fluide F2 perturbe de manière déterministe le flux de premier fluide F1 : il est donc possible de dimensionner la buse 22 et l'orifice en conséquence,
- l'orientation relative des flux des premier et deuxième fluides permet de compenser la courbure des trajectoires en raison de la gravité,
- la perte de charge sur le deuxième fluide F2 est faible,
- un mouillage annulaire est possible, ce qui est parfaitement adapté à la géométrie des échangeurs 11 à plaque spiralée 12,
- la réaction d'absorption peut déjà s'amorcer dans le premier boîtier d'alimentation 19,
- il est improbable de mouiller la zone centrale puisque le deuxième fluide F2 exerce une poussée radialement vers l'extérieur autour de l'axe X : ceci évite d'engorger l'intérieur de la spirale,
- la disposition d'alignement des entrées 31 et 32 permet de minimiser l'effet de masque sur le flux de premier fluide F1 éjecté : une réduction de section sur l'entrée 31 peut être mise en place dans ce même but.

La plaque spiralée 12 de l'échangeur 11 est enroulée de sorte à délimiter, en sus du premier canal, le deuxième canal d'écoulement fluidique évoqué précédemment, notamment en forme de spirale. Le deuxième canal débouche sur une deuxième extrémité axiale (non représentée) de l'échangeur 11, opposée à la première extrémité axiale 14. Dans la disposition verticale de l'échangeur 11, la deuxième extrémité axiale correspond à l'extrémité inférieure. Le système, notamment l'échangeur 11, comprend le deuxième boîtier d'alimentation (non représenté) agencé de sorte à prolonger axialement l'échangeur 11 à sa deuxième extrémité axiale. Ce deuxième boîtier sert à alimenter ou à évacuer (en fonction du sens de circulation du troisième fluide par rapport à celui des deux autres fluides) le deuxième canal en troisième fluide F3 de refroidissement, circulant respectivement à courant croisé avec le premier fluide. Cela permet de réaliser un échange thermique, notamment par l'intermédiaire de la plaque 12, avec le premier fluide F1 et/ou le deuxième fluide F2 circulant dans ledit au moins un premier canal 13.

Une application du système est préférentiellement, mais non exclusivement, de pouvoir constituer un absorbeur pour une machine thermodynamique à absorption à partir de cette géométrie existante d'échangeur 11 à plaque spiralée 12, notamment pour :
- les machines thermodynamiques à absorption fonctionnant avec des couples de premier et deuxième fluides comme par exemple les couples ammoniac/eau et bromure de lithium/eau,
- et/ou une tour de lavage : une tour de lavage prévoit de faire circuler, à contre-courant, un gaz (deuxième fluide F2) sous une fine pluie de réactif liquide (premier fluide F1). La finesse des gouttelettes de liquide augmente la surface de réaction.
- et/ou toutes les applications où un film ruisselant est utilisé pour favoriser des transferts de masse entre deux fluides,
- et/ou toutes les applications de double distribution homogène de gaz et de liquide dans des canaux 13 communs aux deux flux.

Notamment, l'invention porte sur une machine de réfrigération par absorption, dans laquelle le deuxième fluide F2 est absorbé par le premier fluide F1 au niveau d'un absorbeur constitué par un système correspondant à la description précédente. La machine peut alors comprendre, en sus, un système solaire thermique prenant en entrée de l'énergie solaire pour dissocier les premier et deuxième fluides F1, F2 en amont d'un tel absorbeur ainsi constitué. Ainsi, la machine thermodynamique utilise alors le système d'une manière telle que les premier et deuxième fluides F1 et F2 sont configurés de sorte que le deuxième fluide F2 est au moins partiellement absorbé par le premier fluide F1 durant l'écoulement dans ledit au moins un premier canal d'écoulement fluidique 13 de forme spiralée, pour constituer cet absorbeur de machine thermodynamique de réfrigération solaire par absorption. Notamment, le premier fluide F1 peut être une solution ammoniac/eau, une solution bromure de lithium/eau ou une solution chlorure de lithium/eau et le deuxième fluide F2 peut être de l'ammoniac ou de l'eau.

Le phénomène d'absorption est spécifique et difficile à appréhender puisqu'il combine un écoulement avec un transfert de masse, un changement de phase et un échange thermique, tous ces phénomènes étant liés entre eux en ce qui concerne les vitesses d'avancement. La présente invention décrit une solution innovante destinée à favoriser les divers phénomènes physiques ayant lieu dans un absorbeur ainsi constitué.

Dans la description précédente, la buse de projection 22 du mode de réalisation réponde à une problématique, à savoir la gestion de l'alimentation de la zone d'entrée de l'échangeur. Ce mode de réalisation fournisse une alimentation homogène de toute la surface de la zone d'entrée de l'échangeur.

## Revendications

1. Système comprenant d'une part un échangeur (11) à plaque spiralée (12) enroulée autour d'un axe principal (X) de l'échangeur, notamment orienté verticalement, de sorte à délimiter un premier canal d'écoulement fluidique (13) de section en forme de spirale débouchant à une première extrémité axiale (14) de l'échangeur au niveau d'une zone d'entrée (15) dont l'encombrement global est compris dans une couronne, d'autre part un dispositif de distribution (16) configuré pour alimenter de manière homogène toute la surface de ladite couronne en au moins un premier fluide (F1), notamment un liquide, **caractérisé en ce que** le dispositif de distribution comprend une buse (22) de projection du premier fluide configurée de sorte à former à sa sortie un jet de premier fluide de forme conique, creux au centre du cône, orienté selon l'axe principal de l'échangeur et tel que le jet présente, au niveau de la zone d'entrée du premier canal d'écoulement fluidique, une forme de couronne présentant des dimensions égales aux dimensions de la couronne de la zone d'entrée.

2. Système selon la revendication 1, **caractérisé en ce que** le premier fluide est éjecté uniformément hors du dispositif de distribution au niveau de la sortie de la buse, ladite sortie étant agencée à une distance (D1) de la zone d'entrée suivant l'axe principal de l'échangeur.

3. Système selon l'une des revendications 1 ou 2, **caractérisé en ce qu'**il comprend un dispositif d'alimentation (21) agencé au-dessus de la première extrémité axiale de l'échangeur est configuré pour alimenter la zone d'entrée du premier canal d'écoulement fluidique en un deuxième fluide (F2), notamment un gaz, en sus du premier fluide.

4. Système selon la revendication 3, **caractérisé en ce que** le dispositif d'alimentation (21) comprend une sortie au niveau de laquelle le deuxième fluide sort hors du dispositif d'alimentation (21) et agencée à une distance (D2) de la zone d'entrée suivant l'axe principal de l'échangeur.

5. Système selon la revendication 4, **caractérisé en ce que** la sortie du dispositif d'alimentation (21) en deuxième fluide est située, selon l'axe principal de l'échangeur, entre la zone d'entrée du premier canal d'écoulement fluidique et le dispositif de distribution en premier fluide.

6. Système selon l'une des revendications 4 ou 5, **caractérisé en ce que** la sortie du dispositif d'alimentation (21) est configurée de sorte que le deuxième fluide est éjecté uniformément au niveau de la sortie d'une manière telle qu'un flux formé par le deuxième fluide sortant hors du dispositif d'alimentation rencontre le premier fluide avant d'atteindre ladite zone d'entrée.

7. Système selon la revendication 6, **caractérisé en ce que** la sortie du dispositif d'alimentation en deuxième fluide est configurée de sorte que le deuxième fluide est éjecté perpendiculairement à l'axe principal de l'échangeur.

8. Système selon l'une des revendications 1 à 7, **caractérisé en ce que** l'échangeur à plaque spiralée et/ou le dispositif de distribution sont configurés de sorte que le premier fluide éjecté hors du dispositif de distribution forme un film ruisselant le long du premier canal d'écoulement fluidique.

9. Système selon la revendication 8, **caractérisé en ce que** le premier canal d'écoulement fluidique est configuré de sorte que, dans celui-ci, le deuxième fluide circule le long du film ruisselant de premier fluide, dans le même sens, et est au moins partiellement absorbé par le premier fluide avec un transfert de masse du deuxième fluide vers le premier fluide.

10. Système selon l'une des revendications 1 à 9, **caractérisé en ce que** la plaque spiralée (12) de l'échangeur est enroulée de sorte à délimiter un deuxième canal d'écoulement fluidique en forme de spirale débouchant à une deuxième extrémité axiale de l'échangeur (11), opposée à la première extrémité axiale, et **en ce qu'**il comprend un deuxième boîtier d'alimentation prolongeant axialement l'échangeur à sa deuxième extrémité axiale et alimentant ou évacuant le deuxième canal d'écoulement fluidique en un troisième fluide (F3) de refroidissement circulant respectivement à courant croisé avec le premier fluide, de sorte à réaliser un échange thermique, notamment par l'intermédiaire de la plaque (12), avec le premier fluide et/ou le deuxième fluide circulant dans le premier canal.

11. Machine thermodynamique comprenant au moins un système selon l'une des revendications 1 à 10.

12. Machine thermodynamique selon la revendication 11, notamment machine de réfrigération par absorption, dans laquelle le deuxième fluide est au moins partiellement absorbé par le premier fluide au niveau d'un absorbeur constitué par ledit système.

13. Utilisation d'un système selon l'une des revendications 1 à 10 dans laquelle les premier et deuxième fluides sont configurés de sorte que le deuxième fluide est au moins partiellement absorbé par le premier fluide durant l'écoulement dans ledit au moins un premier canal d'écoulement fluidique, pour constituer un absorbeur pour une machine thermodynamique de réfrigération par absorption solaire.

## Patentansprüche

1. System, das Folgendes umfasst: einerseits einen Wärmetauscher (11) mit spiralförmiger Platte (12), die um eine Hauptachse (X) des Wärmetauschers gewickelt ist, die insbesondere vertikal orientiert ist, derart, dass ein erster Fluidströmungskanal (13) mit spiralförmigem Querschnitt begrenzt wird, der an einem ersten axialen Ende (14) des Tauschers auf Höhe einer Eingangszone (15) mündet, deren globaler Platzbedarf in einem Kranz enthalten ist, und andererseits eine Verteilungsvorrichtung (16), die konfiguriert ist, die gesamte Oberfläche des Kranzes mit wenigstens einem ersten Fluid (F1), insbesondere einer Flüssigkeit, homogen zu versorgen, **dadurch gekennzeichnet, dass** die Verteilungsvorrichtung eine Düse (22) zum Ausstoßen des ersten Fluids umfasst, die so konfiguriert ist, dass an ihrem Ausgang ein Strahl des ersten Fluids mit konischer Form, der in der Mitte des Kegels hohl ist und in Richtung der Hauptachse des Tauschers orientiert ist, gebildet wird, und derart, dass der Strahl auf Höhe der Eingangszone des ersten Fluidströmungskanals eine Kranzform aufweist, die Abmessungen besitzt, die gleich den Abmessungen des Kranzes der Eingangszone sind.

2. System nach Anspruch 1, **dadurch gekennzeichnet, dass** das erste Fluid von der Verteilungsvorrichtung auf Höhe des Ausgangs der Düse gleichmäßig ausgestoßen wird, wobei der Ausgang in einem Abstand (D1) der Eingangszone längs der Hauptachse des Tauschers angeordnet ist.

3. System nach einem der Ansprüche 1 oder 2, **dadurch gekennzeichnet, dass** es eine Versorgungsvorrichtung (21) umfasst, die über dem ersten axialen Ende des Tauschers angeordnet ist und konfiguriert ist, die Eingangszone des ersten Fluidströmungskanals zusätzlich zu dem ersten Fluid mit einem zweiten Fluid (F2), insbesondere einem Gas, zu versorgen.

4. System nach Anspruch 3, **dadurch gekennzeichnet, dass** die Versorgungsvorrichtung (21) einen Ausgang aufweist, auf dessen Höhe das zweite Fluid die Versorgungsvorrichtung (21) verlässt, der längs der Hauptachse des Tauschers in einem Abstand (D2) von der Eingangszone angeordnet ist.

5. System nach Anspruch 4, **dadurch gekennzeichnet, dass** sich der Ausgang der Vorrichtung (21) für die Versorgung mit einem zweiten Fluid längs der Hauptachse des Tauschers zwischen der Eingangszone des ersten Fluidströmungskanals und der Vorrichtung für die Verteilung des ersten Fluids befindet.

6. System nach einem der Ansprüche 4 oder 5, **dadurch gekennzeichnet, dass** der Ausgang der Vorrichtung (21) für die Versorgung in der Weise konfiguriert ist, dass das zweite Fluid auf Höhe des Ausgangs gleichmäßig ausgestoßen wird, derart, dass ein Fluss, der durch das die Versorgungsvorrichtung verlassende zweite Fluid gebildet wird, auf das erste Fluid trifft, bevor er die Eingangszone erreicht.

7. System nach Anspruch 6, **dadurch gekennzeichnet, dass** der Ausgang der Vorrichtung für die Versorgung mit einem zweiten Fluid in der Weise konfiguriert ist, dass das zweite Fluid senkrecht zu der Hauptachse des Tauschers ausgestoßen wird.

8. System nach einem der Ansprüche 1 bis 7, **dadurch gekennzeichnet, dass** der Tauscher mit spiralförmiger Platte und/oder die Verteilungsvorrichtung in der Weise konfiguriert sind, dass das erste Fluid, das aus der Verteilungsvorrichtung ausgestoßen wird, einen Film bildet, der längs des ersten Fluidströmungskanals rinnt.

9. System nach Anspruch 8, **dadurch gekennzeichnet, dass** der erste Fluidströmungskanal in der Weise konfiguriert ist, dass in diesem das zweite Fluid längs des rinnenden Films des ersten Fluids in der gleichen Richtung zirkuliert und wenigstens teilweise durch das erste Fluid mit einer Massenübertragung von dem zweiten Fluid zu dem ersten Fluid absorbiert wird.

10. System nach einem der Ansprüche 1 bis 9, **dadurch gekennzeichnet, dass** die spiralförmige Platte (12) des Tauschers in der Weise gewickelt ist, dass sie einen zweiten Fluidströmungskanal mit Spiralform begrenzt, der in ein zweites axiales Ende des Tauschers (11) gegenüber dem ersten axialen Ende mündet, und dass es einen zweiten Versorgungskasten umfasst, der den Tauscher an seinem zweiten axialen Ende axial verlängert und den zweiten Fluidströmungskanal mit einem dritten Kühlungsfluid (F3), das in einem Kreuzstrom mit dem ersten Fluid zirkuliert, versorgt oder dieses Fluid hiervon abführt, derart, dass ein Wärmeaustausch, insbesondere über die Platte (12), mit dem ersten Fluid und/oder dem zweiten Fluid, die in dem ersten Kanal zirkulieren, bewirkt wird.

11. Thermodynamische Maschine, die wenigstens ein System nach einem der Ansprüche 1 bis 10 umfasst.

12. Thermodynamischen Maschine nach Anspruch 11, insbesondere Absorptionskühlungsmaschine, in der das zweite Fluid auf Höhe eines durch das System gebildeten Absorbers wenigstens teilweise durch das erste Fluid absorbiert wird.

13. Verwendung eines Systems nach einem der Ansprüche 1 bis 10, wobei das erste und das zweite Fluid in der Weise konfiguriert sind, dass das zweite Fluid wenigstens teilweise durch das erste Fluid absorbiert wird, während sie in dem wenigstens einen ersten Fluidströmungskanal strömen, um einen Absorber für eine thermodynamische Solar-Absorptionskühlungsmaschine zu bilden.

## Claims

1. System comprising on the one hand an exchanger (11) with a spiral plate (12) coiled around a principal axis (X) of the exchanger, in particular being oriented vertically, so as to delimit a first fluid flow channel (13) having a cross section in the form of a spiral discharging at a first axial extremity (14) of the exchanger at an inlet zone (15) of which the overall size is contained within a crown, and on the other hand a distribution device (16) configured in order to supply the whole of the surface of the said crown in a homogeneous manner with at least a first fluid (F1), in particular a liquid, **characterized in that** the distribution device comprises a spray nozzle (22) for the first fluid configured so as to form at its outlet a jet of the first fluid of conical shape, being hollow at the centre of the cone, oriented in the principal axis of the exchanger, and such that the jet exhibits, at the inlet zone of the first fluid flow channel, the shape of a crown having dimensions equal to the dimensions of the crown of the inlet zone.

2. System according to Claim 1, **characterized in that** the distribution device comprises an outlet in the area of which the first fluid is ejected uniformly from the distribution device and is arranged at a distance (D1) from the inlet zone in the principal axis of the exchanger.

3. System according to one of Claims 1 or 2, **characterized in that** it comprises a supply device (21) arranged above the first axial extremity of the exchanger and is configured in order to supply the inlet zone of the first fluid flow channel with a second fluid (F2), in particular a gas, in addition to the first fluid.

4. System according to Claim 3, **characterized in that** the supply device (21) comprises an outlet in the area of which the second fluid exits from the supply device (21) and is arranged at a distance (D2) from the inlet zone in the principal axis of the exchanger.

5. System according to Claim 4, **characterized in that** the outlet of the supply device (21) for the second fluid is situated, in the principal axis of the exchanger, between the inlet zone of the first fluid flow channel and the distribution device for the first fluid.

6. System according to one of Claims 4 or 5, **characterized in that** the outlet of the supply device (21) is configured such that the second fluid is ejected uniformly at the outlet in a manner such that a flow formed by the second fluid exiting from the supply device meets the first fluid before reaching the said inlet zone.

7. System according to Claim 6, **characterized in that** the outlet of the supply device for the second fluid is configured such that the second fluid is ejected perpendicularly to the principal axis of the exchanger.

8. System according to one of Claims 1 to 7, **characterized in that** the spiral plate exchanger and/or the distribution device are configured such that the first fluid ejected from the distribution device forms a film flowing along the first fluid flow channel.

9. System according to Claim 8, **characterized in that** the first fluid flow channel is configured in such a way that, in the latter, the second fluid circulates along the flowing film of first fluid, in the same direction, and is at least partially absorbed by the first fluid with a transfer of mass from the second fluid towards the first fluid.

10. System according to one of Claims 1 to 9, **characterized in that** the spiral plate (12) of the exchanger is coiled so as to delimit a second fluid flow channel in the shape of a spiral discharging at a second axial extremity of the exchanger (11), opposite the first axial extremity, and **in that** it comprises a second supply housing extending the exchanger axially at its second axial extremity and supplying or evacuating the second fluid flow channel with a third cooling fluid (F3) circulating respectively in a cross-flow with the first fluid, so as to bring about a thermal exchange, in particular by means of the plate (12), with the first fluid and/or the second fluid circulating in the first channel.

11. Thermodynamic machine comprising at least a system according to one of Claims 1 to 10.

12. Thermodynamic machine according to Claim 11, in particular an absorption refrigeration machine, in which the second fluid is at least partially absorbed by the first fluid at an absorber constituted by the said system.

13. Utilization of a system according to one of Claims 1 to 10 in which the first and second fluids are configured such that the second fluid is at least partially absorbed by the first fluid during the flow in the said at least one first fluid flow channel, in order to constitute an absorber of a thermodynamic machine for refrigeration by solar absorption.
